# EUROPÄISCHE PATENTANMELDUNG

(11) **EP 2 375 636 A1**
(43) Veröffentlichungstag der Anmeldung: **12.10.2011**
(21) Anmeldenummer: 10003394.3
(22) Anmeldetag: 29.03.2010
(51) Int. Cl.: H04L 12/24, H04L 12/40

(54) **Vorrichtung und Verfahren zum Konfigurieren eines Bussystems**

(71) Anmelder: SICK AG, 79183 Waldkirch/Breisgau (DE)
(72) Erfinder: Weddingfeld, Klaus, 79183 Waldkirch (DE); Rose, Markus, 79106 Freiburg (DE)
(74) Vertreter: Manitz, Finsterwald & Partner GbR

(57) **Zusammenfassung**

Die vorliegende Erfindung betrifft eine Vorrichtung zum Konfigurieren eines Bussystems, das mehrere Teilnehmer sowie einen Bus-Master und einen Sicherheitsmonitor umfasst, mit einer Eingabeeinheit, über die zum Konfigurieren des Bussystems geeignete Konfigurations-Informationen eingebbar und/oder auswählbar sind, und einer Konfigurationseinheit, die ausgebildet ist, um mittels zumindest einer identischen, über die Eingabeeinheit eingegebenen oder ausgewählten Gemeinschafts-Konfigurations-Information sowohl den Bus-Master als auch den Sicherheitsmonitor zu konfigurieren. Die Erfindung betrifft weiterhin ein Verfahren, das mit der erfindungsgemäßen Vorrichtung durchgeführt werden kann.

## Beschreibung

Die vorliegende Erfindung betrifft eine Vorrichtung und ein Verfahren zum Konfigurieren eines Bussystems, das mehrere Teilnehmer sowie einen Bus-Master und einen Sicherheitsmonitor umfasst, insbesondere eines Feldbussystems.

Zur Steuerung von industriellen Prozessen werden zunehmend nach dem Master-Slave arbeitende Bussysteme und insbesondere Feldbussysteme eingesetzt. Bei den Teilnehmern eines solchen Bussystems, die auch als Slaves bezeichnet werden, kann es sich um Sensoren und/oder Aktoren handeln, durch die Prozesse überwacht und gesteuert werden. Ein Bus-Master steuert hierbei die Kommunikation der Teilnehmer über den Bus.

Der Bus-Master des Bussystems ist ausgebildet, um die die Kommunikation der Teilnehmer über den Bus zu steuern, indem er die Teilnehmer zyklisch abfragt, was auch als Polling bezeichnet wird, und die Antworten der Teilnehmer auf die zyklischen Anfragen registriert. Jeder Teilnehmer wird von dem Bus-Master auf einer bestimmten Bus-Adresse angesprochen, die dem Teilnehmer zugeordnet ist. Bei einem beispielhaften Bus-system, das dem Standard-"Aktuator/ Sensor-Interface" ("AS-Interface" oder "AS-i") entspricht, stehen beispielsweise 31 verschiedene Bus-Adressen für 61 verschiedene Teilnehmer zur Verfügung. Der Bus-Master übernimmt zusätzlich zur Steuerung der Kommunikation auch unterschiedliche Diagnose- und Wartungsaufgaben auf dem Bus.

Wenn in derartigen Bussystemen sicherheitsrelevante Informationen von oder zu sicherheitsgerichteten Teilnehmern übertragen werden sollen, beispielsweise Informationen von sicherheitsgerichteten Sensoren, die einen gefährlichen Prozessbereich schützen und eine Abschaltung z.B. einer Presse bewirken sollen, wenn ein Mensch in den Sicherheitsbereich eindringt, muss eine sichere Übertragung und Auswertung der Informationen in dem Bussystem sichergestellt werden.

Um die einschlägigen Sicherheitsstandards zu erfüllen, ist bei solchen Bussystemen zur Kommunikation mit den sicherheitsgerichteten Teilnehmern als zusätzliche Kommunikationskomponente ein Sicherheitsmonitor vorgesehen, der die auf den Bus übertragenen Nachrichten abhört und die sicherheitsrelevanten Informationen sicher auswertet. Der Sicherheitsmonitor kann dabei eine Logikauswertung der sicherheitsrelevanten Informationen umfassen sowie einen Ausgang, auf dem abhängig von der Logikauswertung im Gefahrenfall eine Sicherheitsabschaltung eines Prozesses bewirkt werden kann. Das Bussystem kann prinzipiell sowohl sicherheitsgerichtete als auch nicht sicherheitsgerichtete Teilnehmer umfassen.

Je nach dem konkreten Anwendungsfall und den Eigenschaften des überwachten bzw. gesteuerten Prozesses ist die Anzahl und die Art der Teilnehmer, die in einem konkreten Bussystem über den Bus mit einer entsprechenden Steuerung kommunizieren, variabel. Im Auslieferungszustand wissen Bus-Master und Sicherheitsmonitor deshalb jeweils nicht, wie viele Teilnehmer vorhanden sind bzw. an den Bus angeschaltet werden sollen, bzw. um welche Art von Teilnehmern es sich handelt und auf welchen Bus-Adressen mit den jeweiligen Teilnehmern kommuniziert werden soll.

Damit der Bus-Master und der Sicherheitsmonitor in einem konkreten System ihre Funktionen erfüllen können, d.h. damit der Bus-Master die Kommunikation der Slaves auf dem Bus steuern kann und der Sicherheitsmonitor die sicherheitsrelevanten Informationen auslesen und sicher auswerten kann, müssen vor der Inbetriebnahme des Bussystems der Bus-Master und der Sicherheitsmonitor dem konkreten System entsprechend konfiguriert werden. Das heißt, es müssen die in dem konkreten Bussystem vorgesehenen Teilnehmer betreffende Konfigurations-Informationen erfasst und die Arbeitsabläufe in dem Bus-Master und dem Sicherheitsmonitor durch einen entsprechenden Konfigurationsvorgang an die jeweilige Teilnehmerkonstellation angepasst werden.

Zum Beispiel bei einem AS-i Bussystem müssen sowohl der Bus-Master als auch der Sicherheitsmonitor beispielsweise in Abhängigkeit davon konfiguriert werden, wie viele bzw. welche Bus-Adressen mit Teilnehmern belegt sind und mit welchen Typen von Busteilnehmern die Adressen belegt sind.

Ein AS-i-Bussystem ist beispielsweise in der DE 10 2008 045 590 B3 beschrieben, wo Module vorgesehen sind, die sowohl Komponenten des Masters als auch des Sicherheitsmonitors sind und die vom Master und vom Sicherheitsmonitor gemeinsam genutzt werden.

Bei bekannten Verfahren und Vorrichtungen zum Konfigurieren eines wie vorstehend beschriebenen Bussystems müssen die zum Konfigurieren des Bus-Masters notwendigen Konfigurations-Informationen von einem Benutzer in eine Eingabeeinheit eingegeben werden, woraufhin der Bus-Master von einer mit der Eingabeeinheit gekoppelten Konfigurationseinheit mit den eingegebenen Konfigurations-Informationen konfiguriert wird. Außerdem müssen die für die Konfiguration des Sicherheitsmonitors notwendigen Konfigurations-Informationen von einem Benutzer gesondert in eine Eingabeeinheit eingegeben werden, woraufhin der Sicherheitsmonitor von einer Konfigurationseinheit mit diesen Konfigurations-Informationen konfiguriert wird.

Die bekannten Verfahren und Vorrichtungen zur Konfiguration eines wie vorstehend beschriebenen Bussystems erfordern daher einen hohen Konfigurationsaufwand für den Benutzer und verursachen eine hohe Fehleranfälligkeit der Konfiguration. Es kann beispielsweise passieren, dass der Bus-Master und der Sicherheitsmonitor nach der Konfiguration nicht richtig funktionieren, beispielsweise weil ein Benutzer für die Konfiguration des Bus-Masters einerseits und die Konfiguration des Sicherheitsmonitors andererseits widersprüchliche Informationen über die am Bus vorhandenen Teilnehmer eingegeben hat, sodass Bus-Master und Sicherheitsmonitor nicht auf Basis derselben Konfigurationen konfiguriert sind und somit nicht in der gewünschten Weise zusammenwirken können.

Der Erfindung liegt die Aufgabe zugrunde, eine Vorrichtung und ein Verfahren zu schaffen, mit denen der zum Konfigurieren eines Bussystems mit mehreren Teilnehmern sowie einem Bus-Master und einem Sicherheitsmonitor notwendige Aufwand reduziert wird und zuverlässig eine fehlerfreie Konfiguration des Bussystems gewährleistet werden kann.

Zur Lösung dieser Aufgabe ist eine Vorrichtung mit den Merkmalen des Anspruchs 1 vorgesehen. Die Vorrichtung umfasst eine Eingabeeinheit, über die zum Konfigurieren des Bussystems geeignete Konfigurations-Informationen eingebbar und/oder auswählbar sind, und eine Konfigurationseinheit, die ausgebildet ist, um mittels zumindest einer identischen, über die Eingabeeinheit eingegebenen oder ausgewählten Gemeinschafts-Konfigurations-Information sowohl den Bus-Master als auch den Sicherheitsmonitor zu konfigurieren.

Wenn in diesem Text die ,,Eingabe" von Konfigurations-Informationen beschrieben ist, kann damit insbesondere auch die Auswahl bereits abgespeicherter Konfigurations-Informationen gemeint sein, auch wenn diese Eingabealternative nicht immer explizit genannt ist.

Erfindungsgemäß wird eine Information über die Teilnehmer eines Bussystems, die sowohl für die Konfiguration des Bus-Masters als auch die Konfiguration des Sicherheitsmonitors notwendig ist (eine solche doppelt zu verwendende Konfigurations-Information wird hier auch als "Gemeinschafts-Konfigurations-Information" bezeichnet), also nur durch eine einmalige Eingabe erfasst und dann dieselbe Gemeinschafts-Konfigurations-Information sowohl für die Konfiguration des Bus-Masters als auch für die Konfiguration des Sicherheitsmonitors verwendet.

Dadurch wird erreicht, dass eine solche Gemeinschafts-Konfigurations-Information von einem Benutzer nur einmal eingegeben werden muss und damit dann eine konsistente und weniger fehleranfällige Konfiguration sowohl des Bus-Masters als auch des Sicherheitsmonitors erfolgt. Auf diese Weise wird außerdem der zur Konfiguration für den Benutzer erforderliche Aufwand, der durch die Erfordernis eines zweimaligen Eingebens einer für die Konfiguration von Bus-Master und Sicherheitsmonitor notwendigen Konfigurations-Information entsteht, vermieden. Gleichzeitig wird die Gefahr einer inkonsistenten oder inkorrekten Konfiguration von Sicherheitsmonitor und Bus-Master durch eine etwaige Eingabe von widersprüchlichen Konfigurations-Informationen für den Bus-Master einerseits und den Sicherheitsmonitor andererseits vermieden.

Die erfindungsgemäße Vorrichtung verringert somit den für die Konfiguration des Bussystems notwendigen Aufwand und erhöht gleichzeitig die Fehlersicherheit der Konfiguration. Im Idealfall umfasst die zumindest eine Gemeinschafts-Konfigurations-Information sämtliche die Teilnehmer betreffenden Konfigurations-Informationen, die sowohl eine für die Konfiguration des Bus-Masters als auch des Sicherheitsmonitors notwendige Konfigurations-Information darstellt.

Vorteilhafte Ausführungsformen der Erfindung sind in den Unteransprüchen, der Beschreibung und den Figuren beschrieben.

Die zumindest eine über die Eingabeeinheit eingegebene oder ausgewählte und zur Konfiguration von sowohl Bus-Master als auch Sicherheitsmonitor verwendete Gemeinschafts-Konfigurations-Information kann z.B. eine Adress-Information umfassen, die aussagt, zur Kommunikation mit welchem Teilnehmer des Bussystems eine bestimmte Bus-Adresse zu konfigurieren ist.

Im einfachsten Fall kann die Adress-Information eine Aussage darüber sein, dass auf einer bestimmten Bus-Adresse überhaupt ein Teilnehmer vorhanden ist, der dieser Bus-Adresse zugeordnet ist, bzw. welchen Adressen auf dem Bus ein Teilnehmer zugeordnet ist und welchen nicht. Abhängig von einer solchen Adress-Information kann der Bus-Master dann durch die Konfigurationseinheit konfiguriert werden, um im Rahmen des zyklischen Pollings eine Anfrage an die jeweilige Adresse zu richten und eine Antwort des Teilnehmers auf der jeweiligen Adresse zu erwarten bzw. zu registrieren oder nicht. Ebenso kann der Sicherheitsmonitor anhand von einer solchen Adress-Information konfiguriert werden, die Kommunikation auf dem Bus auf Antworten von einem Teilnehmer auf der jeweiligen Adresse abzuhören und die Antwort zu verarbeiten oder nicht.

Zusätzlich zur Information über das reine Vorhandensein bzw. Zugeordnetsein eines Teilnehmers zu einer bestimmten Bus-Adresse kann die zumindest eine Gemeinschafts-Konfigurations-Information eine Information über eine für die Konfiguration des Bus-Masters und des Sicherheitsmonitors wesentliche Eigenschaft eines einer bestimmten Bus-Adresse zugeordneten Teilnehmers umfassen.

Die Gemeinschafts-Konfigurations-Information kann z.B. eine Sicherheitsinformation umfassen, die aussagt, ob ein einer bestimmten Bus-Adresse zugeordneter Teilnehmer ein sicherheitsgerichteter oder ein nicht sicherheitsgerichteter Teilnehmer ist.

In dem Bussystem können sowohl sicherheitsgerichtete als auch nicht sicherheitsgerichtete Teilnehmer vorhanden sein. Die sicherheitsgerichteten Teilnehmer des Bussystems sind dabei bevorzugt Sensoren, deren Ausgangssignale sicherheitsrelevante Informationen liefern, oder Aktoren, die sicherheitsrelevante Kommandosignale von dem Bus empfangen. Sie sind zu diesem Zweck z.B. mehrkanalig ausgebildet. Alternativ - falls die Sensoren bzw. Aktoren selbst nicht busfähig sind - ist eine zur Anbindung eines solchen Sensors oder Aktors geeignete Busanschaltung entsprechend als sicherheitsgerichteter Teilnehmer ausgestaltet.

Die sicherheitsgerichteten Teilnehmer des Bussystems sind dabei bevorzugt ausgebildet, um eine Übertragung von Signalen über den Bus mit einem im Vergleich zu den nicht sicherheitsgerichteten Teilnehmern erhöhten Sicherheitsniveau zu ermöglichen. Bei einem AS-i-Bussystem wird beispielsweise eine sichere Übertragung der Signale von den sicherheitsgerichteten Teilnehmern über den Bus durch dynamische Codetabellen gewährleistet. Hierbei sendet der sicherheitsgerichtete Teilnehmer einen aus einer im Teilnehmer bekannten Code-Tabelle ausgelesenen Code, der im Sicherheitsmonitor mit einem in einer dortigen Codetabelle abgelegten Code verglichen wird, um festzustellen, in welchem Zustand sich die Kanäle des sicherheitsgerichteten Teilnehmers befinden, wobei der von dem sicherheitsgerichteten Teilnehmer gesendete Code gemäß der dynamischen Codetabelle zwischen verschiedenen Abfrage-Zyklen variiert. Hierdurch wird eine erhöhte Fehlersicherheit der Übertragung auf dem Bus für die sicherheitsgerichteten Teilnehmer gewährleistet, weil systematische Übertragungsfehler ausgeschlossen werden.

Anhand der Sicherheits-Information, die aussagt, ob ein jeweiliger, einer Bus-Adresse zugeordneter Teilnehmer ein sicherheitsgerichteter oder ein nicht sicherheitsgerichteter Teilnehmer ist, kann der Sicherheitsmonitor konfiguriert werden, um nur die von den sicherheitsgerichteten Teilnehmern gesendeten Antworten in sicherer Weise auszuwerten. Der Sicherheitsmonitor kann ferner konfiguriert werden, um nur mit den sicherheitsgerichteten Teilnehmern eine vorgeschaltete Teach-In-Funktion durchzuführen, durch die die vorstehend beschriebenen dynamischen Codetabellen zwischen dem jeweiligen Teilnehmer und dem Sicherheitsmonitor ausgetauscht werden, um dort für den anschließenden Betrieb jeweils verfügbar zu sein.

Der Bus-Master kann mit der Sicherheits-Information konfiguriert werden, um die von den sicherheitsgerichteten Teilnehmern gesendeten Antworten geeignet auszuwerten oder gegebenenfalls nur die von den nicht sicherheitsgerichteten Teilnehmern gesendeten Antworten für eine nachfolgende Logikverarbeitung vorzuverarbeiten, da die sicherheitsgerichteten Teilnehmer bevorzugt in dem Sicherheitsmonitor ausgewertet werden. Die zumindest eine Gemeinschafts-Konfigurations-Information kann auch eine Ein/Ausgangsinformation umfassen, die aussagt, wie viele Eingänge und/oder Ausgänge ein einer bestimmten Bus-Adresse zugeordneter Teilnehmer aufweist.

Die Anzahl der Ein- und Ausgänge des Teilnehmers gibt einen Aufschluss darüber, wie die von dem Teilnehmer gesendeten Antworten zu interpretieren sind. Anhand der Ein/Ausgangsinformation können deshalb sowohl der Bus-Master als auch der Sicherheitsmonitor konfiguriert werden, um eine von einer bestimmten Bus-Adresse zugeordnetem Teilnehmer gesendete Antwort für eine nachfolgende Logikauswertung richtig vor-auszuwerten.

Die Gemeinschafts-Konfigurations-Information kann auch eine Information darüber sein, welchem Busprofil ein einer bestimmten Bus-Adresse zugeordneter Teilnehmer genügt, beispielsweise welchem Geräteprofil gemäß dem AS-i-Standard. Ein solches Busprofil enthält in der Regel eine Information über die Bedeutung der Information, die mit einer Antwort eines Teilnehmers übertragen werden, sowie z.B. darüber, ob bestimmte Verfahren zum Informationsaustausch unterstützt werden oder nicht.

Nach einer vorteilhaften Ausführungsform umfasst die Vorrichtung eine Speichereinheit mit mehreren Teilnehmerbeschreibungen unterschiedlicher Teilnehmertypen, wobei die Teilnehmerbeschreibungen für die jeweiligen Teilnehmertypen relevante Konfigurations-Informationen enthalten, und die Eingabeeinheit derart ausgestaltet ist, dass die Eingabe der Konfigurations-Informationen die Auswahl eines Teilnehmertypen mit der ihm zugeordneten Teilnehmerbeschreibung und die Zuordnung von Teilnehmertyp und Teilnehmerbeschreibung zu einer bestimmten Bus-Adresse umfasst.

In der Speichereinheit der Vorrichtung sind damit bereits die für einen bestimmten Teilnehmertypen relevanten Konfigurations-Informationen abgelegt, sodass während der Konfiguration durch einen Benutzer nur der jeweilige Teilnehmertyp mit der ihm zugeordneten Teilnehmerbeschreibung ausgewählt werden muss, um sämtliche in der Teilnehmerbeschreibung abgelegten Konfigurations-Informationen für die anschließende Konfiguration zur Verfügung zu stellen. Hierdurch kann der Konfigurationsaufwand weiter reduziert und die Fehlersicherheit der Konfiguration weiter verbessert werden, indem nur noch der richtige Typ ausgewählt werden muss und die restlichen Konfigurations-Informationen automatisch aus der Teilnehmerbeschreibung geladen werden können.

Die Teilnehmerbeschreibung eines Teilnehmertypen kann insbesondere eine oder mehrere der vorstehend beschriebenen Gemeinschafts-Konfigurations-Informationen umfassen. Die Teilnehmerbeschreibung kann dabei eine oder mehrere Gemeinschafts-Konfigurations-Informationen enthalten, mittels derer die Konfigurationseinheit sowohl den Bus-Master als auch den Sicherheitsmonitor konfiguriert, aber zusätzlich auch solche Konfigurations-Informationen, mittels derer die Konfigurationseinheit nur einen der beiden Komponenten Bus-Master und Sicherheitsmonitor konfiguriert, und die insofern keine Gemeinschafts-Konfigurations-Informationen darstellen.

Eine besonders einfache und fehlersichere Auswahl der Teilnehmertypen und den zugeordneten Teilnehmerbeschreibungen wird ermöglicht, wenn die Vorrichtung eine Anzeigeeinheit umfasst, die dazu ausgebildet ist, um in einem ersten Anzeigebereich grafische Repräsentationen der einzelnen Teilnehmertypen anzuzeigen und in einem zweiten Anzeigebereich grafische Repräsentationen von einzelnen Bus-Adressen anzuzeigen.

Die Vorrichtung kann dann dazu ausgebildet sein, einem Benutzer die Zuordnung eines Teilnehmertyps zu einer Bus-Adresse mittels einer Drag-and-Drop-Funktionalität zwischen den grafischen Repräsentationen der Teilnehmertypen und den grafischen Repräsentationen der Bus-Adressen zu ermöglichen.

Durch eine solche Drag-and-Drop-Funktionalität kann eine für den Benutzer besonders einfache und anschaulich besonders gut nachvollziehbare Zuordnung eines Teilnehmertypen zu einer Bus-Adresse erfolgen. Zur Bereitstellung der Drag-and-Drop-Funktionalität umfasst die Vorrichtung zumindest ein geeignetes, mit der Anzeigeeinrichtung gekoppeltes Eingabegerät, wie beispielsweise eine Computermaus. Nach einer Zuordnung eines Teilnehmertypen zu einer Bus-Adresse wird vorzugsweise die grafische Repräsentation der Bus-Adresse so geändert, dass die Zuordnung des Teilnehmertyps zu der Bus-Adresse erkennbar ist. Auf diese Weise ist für den Benutzer leicht erkennbar, dass der Adresse bereits ein Teilnehmer zugeordnet wurde, so dass der Benutzer bei der Verteilung der in seinem Bussystem geplanten Teilnehmer auf die verfügbaren Bus-Adressen leicht erkennen kann, welche Adressen bereits belegt sind und welche noch frei sind.

Um eine versehentliche Doppelzuordnung von mehreren Teilnehmertypen zu einer Bus-Adresse zu vermeiden, kann eine Drag-and-Drop-Funktionalität auf eine Bus-Adresse, der bereits ein Teilnehmertyp zugeordnet ist, so lange deaktiviert werden, bis der der Bus-Adresse bereits zugeordnete Teilnehmer durch den Benutzer durch eine entsprechende Eingabe gegebenenfalls wieder entfernt wird.

Wie bereits erwähnt, kann wenigstens ein Teilnehmer des Bussystems eine Busanschaltung sein. Eine solche Busanschaltung dient zur Anbindung eines Sensors oder Aktors, der selbst keine für die Anbindung an das Bussystem vorgesehene Schnittstelle umfasst und über eine Busanschaltung an den Bus anbindbar ist. Für sicherheitsgerichtete und insbesondere zweikanalige Sensoren oder Aktoren kann entsprechend eine sicherheitsgerichtete Busanschaltung mit entsprechenden Eingängen für die einzelnen Kanäle und einer entsprechenden Fähigkeit zur sicheren Kommunikation auf dem Bus vorgesehen sein, während für nicht sicherheitsgerichtete Sensoren und Aktoren eine nicht sicherheitsgerichtete Busanschaltung verwendbar ist.

Eine wie vorstehend beschriebene Busanschaltung weist zur Anbindung der Anschlüsse der jeweiligen Sensoren oder Aktoren einen oder mehrere Eingänge und/oder einen oder mehrere Ausgänge auf. Insbesondere bei der Verwendung von sicherheitsgerichteten Busanschaltungen kann die Konfiguration des Sicherheitsmonitors nicht nur von den Eigenschaften der Busanschaltung, sondern gleichzeitig auch von den Eigenschaften eines an die Eingänge der Busanschaltung angeschlossenen, sicherheitsgerichteten Sensors bzw. gegebenenfalls an die Ausgänge der Busanschaltung angeschlossenen, sicherheitsgerichteten Aktors abhängen.

Die für den Sicherheitsmonitor notwendige Konfigurations-Information kann somit auch eine Information über einen an eine sicherheitsgerichtete Busanschaltung angeschlossenen sicherheitsgerichteten Sensor umfassen.

Diese Konfigurations-Information kann insbesondere die Konfiguration der vom Sicherheitsmonitor durchgeführten Logik-Vorauswertung der von den sicherheitsgerichteten Teilnehmern empfangenen Daten betreffen. Beispielsweise ist bei Verwendung einer Zweihandsteuerung als sicherheitsgerichteter Sensor üblicherweise eine Synchronität der Zustände beider Schalter der Zweihandsteuerung in einem bestimmten Zeitintervall von beispielsweise 0,5 Sekunden gefordert, damit von einem sicheren Zustand ausgegangen werden darf und keine Sicherheitsabschaltung durchgeführt wird. Die Logik-Vorauswertung des Sicherheitsmonitors ist in diesem Fall so zu konfigurieren, dass der Sicherheitsmonitor die von der Busanschaltung, an die die Zweihandsteuerung angeschlossen ist, empfangenen Information über den Zustand des ersten und des zweiten Schalters der Zweihandsteuerung so vorausgewertet werden, dass nur bei Erfüllen dieses Synchronitätserfordernisses ein sicherer Zustand an die auf die Logikvorauswertung folgende Logikauswertung weitergegeben wird und anderenfalls nicht. Hierzu muss die Logikvorauswertung des Sicherheitsmonitors mit entsprechenden Informationen über die notwendige Logik-Vorauswertung konfiguriert werden.

Um die Eingabe einer solchen Information über die notwendige Logikvorauswertung des Teilnehmers bzw. der Busanschaltung zu erleichtern, umfasst eine Speichereinheit bevorzugt eine Reihe von Elementbeschreibungen unterschiedlicher Sensor- oder Aktortypen, wobei die Elementbeschreibungen relevante Konfigurations-Informationen für diejenigen Sensor- oder Aktortypen enthalten, die für sich genommen nicht busfähig sind und/oder über eine Busanschaltung angeschlossen werden. Die Eingabe der Konfigurations-Information kann dann die Auswahl eines Elementtypen mit der ihm zugeordneten Elementbeschreibung und die Zuordnung des Elementtypen zu einer bereits ausgewählten und einer Bus-Adresse zugeordneten Busanschaltung umfassen. Hierbei ist es bevorzugt, wenn eine einer Adresse zugeordnete Busanschaltung in der grafischen Repräsentation dieser Bus-Adresse angezeigt wird und eine Drag-and-Drop-Funktionalität zwischen einer grafischen Repräsentation des Elementtypen und der grafischen Repräsentation der Bus-Adresse bzw. des der Bus-Adresse zugeordneten Busanschaltung vorgesehen ist.

Neben der vorstehend beschriebenen Vorrichtung ist auch ein Verfahren zum Konfigurieren eines Bussystems mit den Merkmalen des Anspruchs 9 Gegenstand der Erfindung. Das Verfahren zum Konfigurieren eines Bussystems, das mehrere Teilnehmer sowie einen Bus-Master und einen Sicherheitsmonitor aufweist, umfasst die Schritte:
- Eingeben oder Auswählen von zum Konfigurieren des Bussystems geeigneten Konfigurations-Informationen, und
- Konfigurieren sowohl des Bus-Masters als auch des Sicherheitsmonitors mittels zumindest einer identischen, eingegebenen oder ausgewählten Gemeinschafts-Konfigurations-Information.

Das Verfahren kann dabei insbesondere durch die bestimmungsgemäße Verwendung einer wie vorstehend beschriebenen Vorrichtung durchgeführt werden. Die vorstehend in Bezug auf die Vorrichtung beschriebenen Ausführungsformen und Vorteile sind dementsprechend auch auf das erfindungsgemäße Verfahren anwendbar.

Zum Beispiel kann die zumindest eine Gemeinschafts-Konfigurations-Information eine Sicherheitsinformation umfassen, die aussagt, ob ein einer bestimmten Bus-Adresse zugeordneter Teilnehmer ein sicherheitsgerichteter Teilnehmer oder ein nicht sicherheitsgerichteter Teilnehmer ist.

Im Rahmen des Verfahrens können mehrere Teilnehmerbeschreibungen unterschiedlicher Teilnehmertypen abgespeichert sein, wobei die Teilnehmerbeschreibungen für die jeweiligen Teilnehmertypen relevante Konfigurations-Information enthalten, und das Eingeben oder das Auswählen der Konfigurations-Information die Auswahl eines Teilnehmertyps mit der ihm zugeordneten Teilnehmerbeschreibung umfasst. Die Auswahl eines Teilnehmertyps mit der ihm zugeordneten Teilnehmerbeschreibung und die Zuordnung derselben zu einer bestimmten Bus-Adresse kann dabei insbesondere durch Bereitstellen einer wie vorstehend beschriebenen Drag-and-Drop-Funktionalität ermöglicht werden.

Weiterer Gegenstand der Erfindung ist ein Computerprogramm, das dazu ausgebildet ist, einen Computer so zu konfigurieren, dass durch den Computer ein wie vorstehend beschriebenes Verfahren ausführbar ist.

Schließlich ist ein elektronischer Datenträger bzw. ein elektronisches Speichermedium weiterer Gegenstand der Erfindung, der/ das dazu ausgebildet ist, mit einem Computer so zusammenzuwirken, dass der Computer so konfiguriert wird, dass durch den Computer ein wie vorstehend beschriebenes Verfahren ausführbar ist.

Nachfolgend wird die vorliegende Erfindung rein beispielhaft anhand einer vorteilhaften Ausführungsform unter Bezugnahme auf die beigefügten

Figuren beschrieben. Es zeigen:
- Fig. 1: eine schematische Ansicht eines Bussystems mit einer an das Bussystem angeschlossenen, erfindungsgemäßen Konfigurationsvorrichtung;
- Fig. 2: eine schematische Ansicht einer grafischen Benutzeroberfläche für das Eingeben bzw. Auswählen von Konfigurations-Informationen;
- Fig. 3: die grafische Benutzeroberfläche von Fig. 2 nach der Eingabe von Konfigurations-Informationen;
- Fig. 4: die grafische Benutzeroberfläche von Fig. 3 nach einer Eingabe von weiteren Konfigurations-Informationen; und
- Fig. 5: eine schematische Darstellung einer durch den Sicherheitsmonitor durchgeführten Eingangsauswertung und Logik-Vorauswertung.

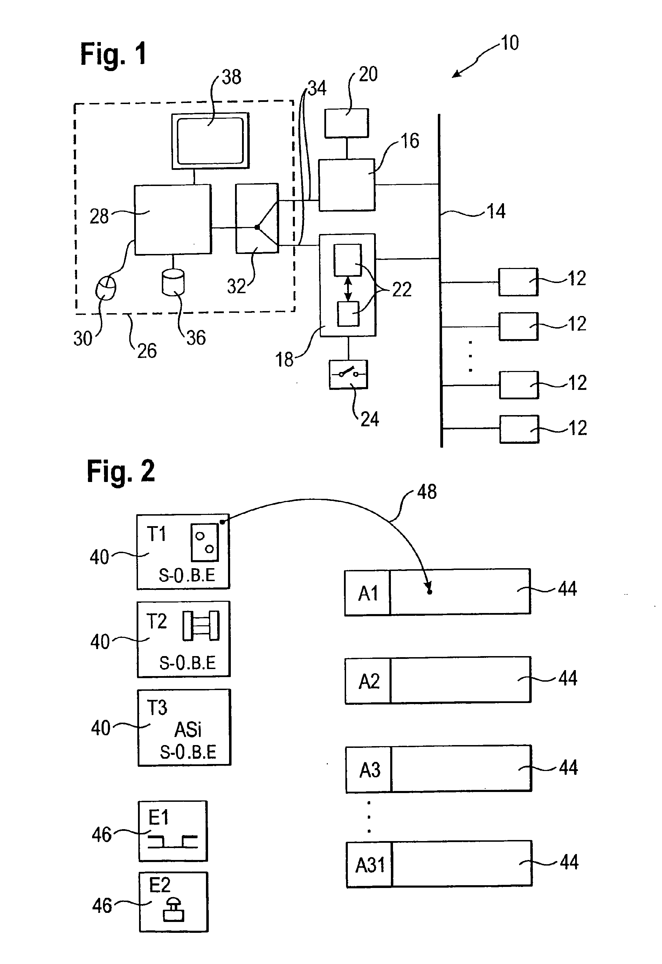

Im Folgenden wird zunächst das in Fig. 1 dargestellte Bussystem sowie dessen Funktionalität im konfigurierten Zustand genauer erläutert. Anschließend wird auf die Vorrichtung zur Konfiguration des dargestellten Bussystems und die Konfiguration selbst eingegangen.

Fig. 1 zeigt ein serielles Bussystem 10, im konkreten Ausführungsbeispiel ein AS-i-Bussystem 10, mit mehreren Teilnehmern 12, die an eine Busleitung 14 des Bussystems 10 angeschlossen sind, sowie einen mit der Busleitung 14 verbundenen Bus-Master 16 und einen Sicherheitsmonitor 18. Der Bus-Master 16 ist ausgebildet, um die Kommunikation auf dem Bus 14 zu steuern. Hierzu richtet der Bus-Master 16 im Betrieb des Bussystems 10 über die den Teilnehmern 12 jeweils zugeordneten Bus-Adressen zyklische Anfragen an die einzelnen Teilnehmer 12 ("Polling"). Der jeweils angesprochene Teilnehmer 12 sendet dann eine Antwort über den Bus 14, um seinen Zustand mitzuteilen. Im vorliegenden Bus-System 10 sind sicherheitsgerichtete und nicht sicherheitsgerichtete Teilnehmer 12 vorhanden, es können aber prinzipiell auch nur sicherheitsgerichtete Teilnehmer 12 vorhanden sein.

Der Bus-Master 16 ist ausgebildet, um die von den Teilnehmern 12 gesendeten Antworten zu empfangen und normal, d.h. nicht sicher, auszuwerten. Der Bus-Master 16 kann die empfangenen Informationen beispielsweise an eine speicherprogrammierbare Steuerung (SPS) 20 weitergeben, die eine Logikauswertung der Signale übernimmt und gegebenenfalls entsprechende Steuersignale generiert. Solche Steuersignale können an den Bus-Master 16 zurückgegeben und von dort über den Bus 14 an als Busteilnehmer 12 ausgebildete Aktoren zurückgesendet werden.

Der Sicherheitsmonitor 18 ist ausgebildet, um die über den Bus 14 zwischen dem Bus-Master 16 und den Teilnehmern 12 gesendeten Nachrichten und insbesondere die Antworten der Teilnehmer 12 auf die Anfragen des Bus-Masters 16 mitzuhören und sicher auszuwerten. Die sichere Auswertung der vom Sicherheitsmonitor 18 empfangenen Signale erfolgt im vorliegenden Ausführungsbeispiel in einer zweikanaligen Struktur des Sicherheitsmonitors 18 mit zwei redundanten Mikroprozessoren 22, die sich gegenseitig, wie in Fig. 1 durch den Doppelpfeil dargestellt, überwachen.

Der Sicherheitsmonitor 18 nimmt nicht nur eine sichere Auswertung der über den Bus von den sicherheitsgerichteten Teilnehmern 12 gesendeten, sicherheitsrelevanten Informationen vor, sondern gewährleistet gleichzeitig eine sichere Übertragung der von sicherheitsgerichteten Teilnehmern 12 über den Bus 14 gesendeten Daten. Die sicherheitsgerichteten Teilnehmer 12 des Bussystems 10 sind dabei ausgebildet, um in jedem Abfrage-Zyklus abhängig von ihrem jeweiligen Zustand einen Code aus einer Code-tabelle zu senden, wobei der gesendete Code zwischen verschiedenen Zyklen wechselt. Der Sicherheitsmonitor 18 ist ausgebildet, um den von sicherheitsgerichteten Teilnehmern 12 gesendeten Daten mit einer entsprechend im Sicherheitsmonitor 18 abgelegten Codetabelle zu vergleichen, um daraus den Zustand des entsprechenden sicherheitsgerichteten Teilnehmers 12 abzuleiten und insbesondere im Fall einer Abweichung einen nicht sicheren Zustand eines Kanals des Teilnehmers 12 zu schlussfolgern.

Durch die Verwendung der dynamischen Codetabellen zur Kommunikation zwischen den sicherheitsgerichteten Teilnehmern 12 und dem Sicherheitsmonitor 18 werden systematische Übertragungsfehler ausgeschlossen und somit eine sichere Kommunikation ermöglicht. Der vor dem Betrieb notwendige Austausch der dynamischen Codetabellen zwischen den sicherheitsgerichteten Teilnehmern 12 und dem Sicherheitsmonitor 18 erfolgt dabei im Rahmen einer Teach-In-Funktion, die von dem Sicherheitsmonitor 18 nach der Konfiguration des Bussystems 10 durchgeführt werden kann.

Um die entsprechenden Sicherheitsstandards zu erfüllen, sind in dem Bussystem 10 sämtliche Teilnehmer 12, die sicherheitsrelevanten Informationen liefern, als sicherheitsgerichtete Teilnehmer 12 ausgebildet sind, um sicher mit dem Sicherheitsmonitor 18 kommunizieren zu können. Trotzdem kann der Sicherheitsmonitor 18 neben den von den sicherheitsgerichteten Teilnehmern 12 empfangenen Daten zusätzlich auch von nicht sicherheitsgerichteten Teilnehmern 12 empfangene Daten verarbeiten, wenn es die konkrete Anwendung erfordert.

Durch die vorstehend beschriebene Auswertung der von den sicherheitsgerichteten Teilnehmern 12 gesendeten Signale anhand der dynamischen Codetabellen, die auch als Eingangsauswertung bezeichnet wird, kann der Sicherheitsmonitor 18 erfassen, in welchem Zustand sich ein sicherheitsgerichteter Teilnehmer 12 befindet, wobei Übertragungsfehler mit hoher Sicherheit ausgeschlossen werden können. Wie der Sicherheitsmonitor 18 sind auch die sicherheitsgerichteten Teilnehmer 12 mehrkanalig ausgebildet, um die notwendige Sicherheit zu gewährleisten, wobei die von dem Sicherheitsmonitor 18 erfasste Information über die sicherheitsgerichteten Teilnehmers 12 eine Information über den Zustand der einzelnen Kanäle des sicherheitsgerichteten Teilnehmers 12 umfasst.

Auf die vorstehend beschriebene Eingangsauswertung anhand der dynamischen Codetabellen folgend führt der Sicherheitsmonitor eine Logik-Vorauswertung der empfangenen Daten durch, in der der Sicherheitsmonitor 18 die gewonnene Information über die Zustände der einzelnen Kanäle eines sicherheitsgerichteten Teilnehmers 12 logisch miteinander verknüpft, um daraus eine eindeutige Information darüber abzuleiten, ob sich der jeweilige sicherheitsgerichtete Teilnehmer 12 in einem sicheren oder nicht sicheren Zustand befindet.

Bei einer Zweihandsteuerung können zwei Kanäle beispielsweise die Zustände der zwei Schaltelemente der Zweihandsteuerung entsprechen. Bei einer solchen Zweihandsteuerung wird nur dann von einem sicheren Zustand ausgegangen, wenn die von den zwei Schaltern ausgehenden Zustände zeitlich zueinander synchron sind. Je nach erforderlichem Sicherheitsniveau kann z.B. gefordert sein, dass die beiden Schalter bis auf eine zeitliche Toleranz von 0,5 Sekunden oder kürzer synchron sind. Die Logik-Vorauswertung in dem Sicherheitsmonitor 18 kann dann diesen Spezifikationen entsprechend aus den abgeleiteten Zuständen der einzelnen Kanäle der Zweihandsteuerung durch eine Und-Verknüpfung mit einem entsprechenden Zeitverzögerungsglied ein einzelnes Signal erzeugen, das aussagt, ob sich die Zweihandsteuerung in einem sicheren Zustand befindet oder nicht. Dieses Signal kann dann in einer auf die Logik-Vorauswertung folgenden Logikauswertung verwendet werden.

In der Logikauswertung kann der Sicherheitsmonitor 18 oder gegebenenfalls auch eine mit dem Sicherheitsmonitor 18 entsprechend gekoppelte separate sichere Logiksteuerung dann Steuersignale generieren, um abhängig von den Zuständen der sicherheitsgerichteten Teilnehmer 12 eine Sicherheitsabschaltung zu ermöglichen. Zu diesen Zweck kann der Sicherheitsmonitor 18, wie in Fig. 1 gezeigt, über einen separaten Ausgang mit einem Sicherheitsschalter 24 verbunden sein, der durch einen von der in dem Sicherheitsmonitor 18 durchgeführten Logikauswertung abhängiges Steuersignal erhält, welches zweikanalig übertragen und ausgewertet werden kann.

Anstatt einer separaten Verbindung mit einem Sicherheitsschalter 24 kann von dem Sicherheitsmonitor 18 auch eine Rückführung von Steuersignalen zu dem Bus-Master 16 und von dort auf den Bus 14 und zu den Teilnehmern 12 vorgesehen sein.

Damit der Bus-Master 16 und der Sicherheitsmonitor 18 während des Betriebs des Bussystems 10 die vorstehend beschriebenen Funktionen ausführen können, müssen Bus-Master 16 und Sicherheitsmonitor 18 mit entsprechenden, die Teilnehmer 12 betreffenden Konfigurations-Informationen konfiguriert werden, um dadurch die Arbeitsabläufe in dem Bus-Master 16 und dem Sicherheitsmonitor 18 den vorgesehenen Teilnehmer 12 entsprechend anzupassen.

Hierzu ist eine wie in Fig. 1 gezeigte Konfigurationsvorrichtung 26 vorgesehen. Die Vorrichtung 26 umfasst eine Eingabeeinheit 28, über die zum Konfigurieren des Bussystems 10 geeignete Konfigurations-Informationen eingebbar und/oder auswählbar sind. Die Eingabeeinheit 28 umfasst zu diesem Zweck eine Computermaus 30. Die Vorrichtung 26 umfasst auch eine Konfigurationseinheit 32, die ausgebildet ist, um mittels zumindest einer identischen, über die Eingabeeinheit 28 eingegebenen und/oder ausgewählten Gemeinschafts-Konfigurations-Information sowohl den Bus-Master 16 als auch den Sicherheitsmonitor 18 zu konfigurieren. Die Konfigurationseinheit 32 ist hierbei ausgebildet, um eine über die Eingabeeinheit eingegebene und/oder ausgewählte Gemeinschafts-Konfigurations-Information doppelt zu verwenden, nämlich einmal, um den Bus-Master 16 zu konfigurieren, und einmal, um den Sicherheitsmonitor 18 zu konfigurieren.

Hierzu ist die Konfigurationseinheit 32 im vorliegenden Ausführungsbeispiel mit zwei Schnittstellen 34 für die Anbindung des Bus-Masters 16 und des Sicherheitsmonitors 18 ausgestattet. Prinzipiell können Bus-Master 16 und Sicherheitsmonitor 18 gleichzeitig mit der Gemeinschafts-Konfigurations-Information konfiguriert werden, ebenso aber auch zeitlich versetzt, in welchem Fall der Sicherheitsmonitor 18 und der Bus-Master 16 zur Konfiguration auch zeitlich nacheinander an dieselbe Schnittstelle 34 der Konfigurationseinheit 32 angeschlossen werden können.

Die Konfiguration des Bus-Masters 16 und des Sicherheitsmonitors 18 kann prinzipiell vor der Inbetriebnahme des Bussystems 10 und insbesondere auch vor dem Zusammenbau des Bussystems 10 erfolgen, d.h. bevor Sicherheitsmonitor 18 und Bus-Master 16 an die Busleitung 14 angeschlossen sind und/oder bevor einer oder mehrere der Teilnehmer 12 an die Busleitung 14 angeschlossen sind. Ebenso kann die Konfiguration aber auch, wie in Fig. 1 gezeigt, bei zusammengebautem Bussystem 10 erfolgen.

Die Konfigurationsvorrichtung 26 umfasst eine digitale Speichereinheit 36, in der mehrere Teilnehmerbeschreibungen unterschiedlicher Teilnehmertypen abgespeichert sind, wobei die Teilnehmerbeschreibungen für die jeweiligen Teilnehmertypen relevante Konfigurations-Informationen enthalten. Über die Eingabeeinheit 28 ist für einen Benutzer zur Eingabe der Konfigurations-Informationen ein Teilnehmertyp mit der zugehörigen Teilnehmerbeschreibung auswählbar und einer vom Benutzer gewählten Bus-Adresse zuordenbar.

Die Zuordnung eines Teilnehmertypen mit der zugeordneten Teilnehmerbeschreibung ist für den Benutzer über eine Drag-and-Drop-Funktionalität zwischen einer grafischen Repräsentation des Teilnehmertypen und einer grafischen Repräsentation der Bus-Adresse ermöglicht, wobei die grafische Repräsentationen und die Drag-and-Drop-Funktionalität durch eine mit der Eingabeeinheit 28 gekoppelte Anzeigeeinrichtung 38 in Form eines Displays bzw. Monitors erbracht werden.

Die Funktion der Konfigurationsvorrichtung 26 und insbesondere der Eingabeeinheit 28 wird nachfolgend unter Bezugnahme auf Fig. 2 bis 4 anhand einer auf der Anzeige-Einheit 38 von Fig. 1 angezeigten grafischen Benutzeroberfläche erläutert.

Auf der grafischen Benutzeroberfläche sind grafische Repräsentationen 40 von drei verschiedenen Teilnehmertypen vorhanden, wobei jeder grafischen Repräsentation eines Teilnehmertypen eine dem Teilnehmertypen entsprechende Teilnehmerbeschreibung zugeordnet ist. Die grafische Repräsentation 40 enthält jeweils einen Bezeichner des jeweiligen Typen, in diesem Fall die Bezeichner T1, T2 und T3 sowie eine symbolhafte Darstellung eines Teilnehmers des entsprechenden Typs sowie eine Angabe über das AS-i-Geräteprofil, dem der jeweilige Teilnehmer entspricht, im vorliegenden Fall für die Teilnehmertypen T1 und T2 jeweils das AS-i-Geräteprofil S-O.B.E. Der Teilnehmertyp T1 sei eine Busanschaltung, der Teilnehmertyp T2 ein Lichtgitter und der Teilnehmertyp T3 zum Beispiel ein AS-i-fähiger Standardsensor. Die Teilnehmertypen T1 und T2 sind also sicherheitsgerichtete Teilnehmer, während der Teilnehmer T3 ein Standard-AS-i-Teilnehmer ist.

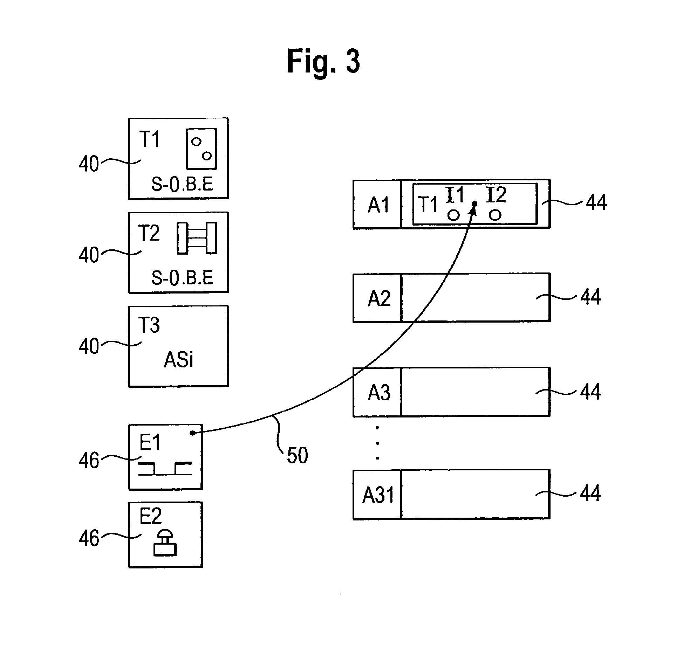

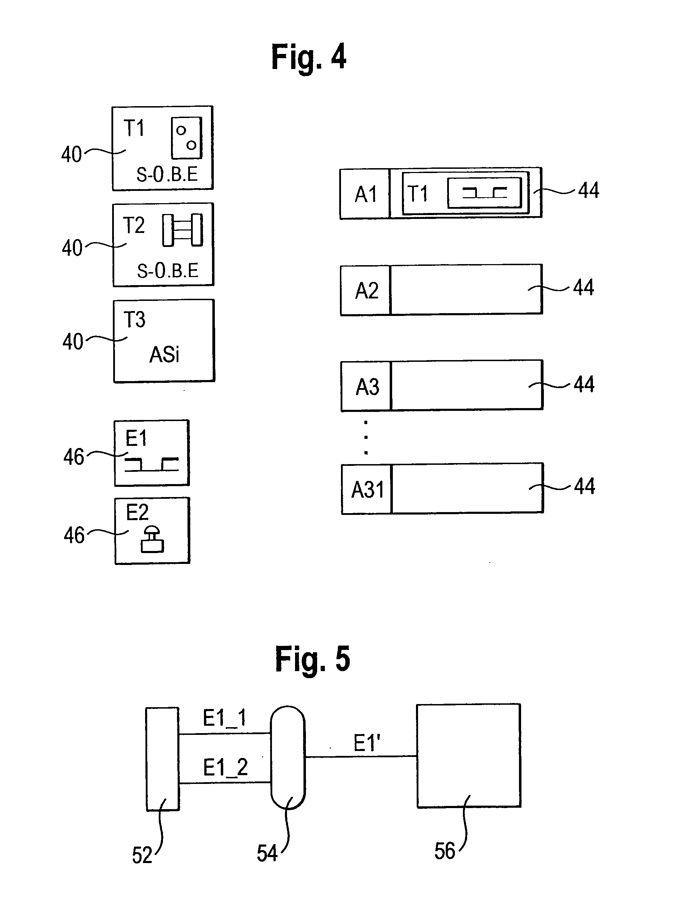

Die grafische Benutzeroberfläche enthält ferner eine grafische Repräsentation 44 mit einem Bezeichner A1 bis A31 für jede auf dem Bussystem verfügbare Adresse, im vorliegenden Fall die bei einem AS-i-Bussystem typischerweise verfügbaren Adressen 1 bis 31. Außerdem sind grafische Repräsentationen 46 von Elementtypen dargestellt, auf die in Bezug auf Fig. 3 und 4 noch genauer eingegangen wird.

Zwischen den grafischen Repräsentationen 40 der Teilnehmertypen T1, T2 und T3 und den grafischen Repräsentationen 44 der Bus-Adressen 1 bis 31 ist eine Drag-and-Drop-Funktionalität vorhanden, sodass, wie in Fig. 2 durch den Pfeil 48 angedeutet, durch einen Benutzer der Teilnehmertyp T1 mit der zugehörigen Teilnehmerbeschreibung einer vom Benutzer bestimmbaren Adresse, z.B. der Adresse 1, zuordenbar ist. Durch eine solche Zuordnung gibt der Benutzer zum einen die Information ein, dass auf der Adresse A1 ein Teilnehmer zugeordnet ist, und ordnet der Adresse gleichzeitig die in der Teilnehmerbeschreibung zum Teilnehmertypen T 1 enthaltenen Konfigurations-Informationen zu, die dann nachfolgend für die Konfiguration des auf der Adresse A1 zugeordneten Teilnehmers im Bus-Master und/oder Sicherheitsmonitor verfügbar sind.

Die Teilnehmerbeschreibungen enthalten hierbei sowohl eine Information, ob es sich um einen sicherheitsgerichteten oder nicht sicherheitsgerichteten Teilnehmertypen handelt, sowie über die Anzahl der Ein- und/oder Ausgänge des Teilnehmers und das AS-i-Geräteprofil, dem der Teilnehmertyp genügt.

Fig. 3 zeigt die grafische Benutzeroberfläche, nachdem der Adresse 1 durch Drag-and-Drop der Teilnehmertyp T1, wie in Fig. 2 durch den Pfeil 48 angedeutet, zugeordnet worden ist. Wie in Fig. 3 gezeigt, ist die grafische Repräsentation 44 der Adresse 1 entsprechend geändert, so dass für den Benutzer die erfolgte Zuordnung des Teilnehmers T1 zur Adresse 1 erkennbar ist.

Bei dem Teilnehmertyp T1 handelt es sich um eine Busanschaltung mit zwei Eingängen 11 und 12, an die ein entsprechender, von sich aus nicht busfähiger sicherheitsgerichteter Sensor angeschlossen werden kann, um über die Busanschaltung mit dem Bussystem verbunden zu werden.

Die Teilnehmerbeschreibung des Teilnehmertypen T1 enthält eine entsprechende Information über das Vorhandensein der zwei Eingänge I1 und I2 und über deren Eigenschaften. In der grafischen Repräsentation 44 der Adresse 1 wird nicht nur der Bezeichner des Teilnehmertypen T1 angezeigt, sondern auch die zwei Eingänge I1 und I2 des Teilnehmertyps T1. Zwischen der grafischen Repräsentation 44 der Adresse 1 und den grafischen Repräsentationen 46 der Elementtypen E und E2 besteht nun eine weitere Drag-and-Drop-Funktionalität, mit der der Adresse 1 zusätzlich zu dem Teilnehmertypen T 1 einer der Elementtypen E1, E2 zugeordnet werden kann. Im vorliegenden Beispiel ist durch den Pfeil 50 eine Zuordnung des Elementtypen E1, der eine sicherheitsgerichtete, zweikanalige Zweihandsteuerung beschreibt, durch den Benutzer zur Adresse 1 mittels Drag-and-Drop angedeutet.

Durch diese Zuordnung gibt der Benutzer an, dass an die Busanschaltung vom Typ T1 eine sichere Zweihandsteuerung vom Typ E 1 angeschaltet ist bzw. angeschaltet werden soll, die im vorliegenden Beispiel nicht ohne Busanschaltung busfähig wäre. Die Drag-and-Drop-Funktionalität zwischen den grafischen Repräsentationen 46 der Elementtypen und der Adressen 44 kann so ausgebildet sein, dass beim Durchführen des Drag-and-Drop überprüft wird, ob der Adresse ein Teilnehmertyp zugeordnet ist, der für die Anschaltung des entsprechenden Elements geeignet ist, beispielsweise ob der Teilnehmertyp für über die geeigneten Anzahlen und Arten von Eingängen und/oder Ausgängen verfügt.

Durch das Drag-and-Drop kann der Elementtyp nicht nur einer Adresse bzw. einem der Adresse zugeordneten Teilnehmertypen zugeordnet werden, sondern es kann durch die genaue Auswahl des Zielorts des Drag-and-Drop innerhalb der grafischen Repräsentation 44 der Bus-Adresse A1 auch ausgewählt werden, welche Eingänge des der Bus-Adresse A1 zugeordneten Teilnehmertypen T1 für die Anschaltung des Elements E1 verwendet werden sollen. Im vorliegenden Ausführungsbeispiel hat der Busteilnehmer T1 nur zwei Eingänge, die beide von den beiden Kanälen der Zweihandsteuerung E1 benötigt werden, so dass eine Auswahl bestimmter Eingänge durch den Benutzer nicht notwendig ist.

Fig. 4 zeigt die grafische Benutzeroberfläche nach der Zuordnung des Elementtypen E1 zur Adresse 1 bzw. dem der Adresse zugeordneten Teilnehmertypen T1 durch den Benutzer mittels des in Fig. 3 durch den Pfeil 50 angedeuteten Drag-and-Drops.

Nachdem der Benutzer in der vorstehend beschriebenen Weise alle in dem Bussystem vorgesehenen Teilnehmer zu einer Adresse zugeordnet hat und gegebenenfalls zusätzlich Elementtypen zu den Adressen bzw. Teilnehmern zugeordnet hat, verfügt die Vorrichtung über alle für die Konfiguration des Bus-Masters und des Sicherheitsmonitors notwendigen Konfigurations-Informationen, einschließlich der Information, welchen Adressen ein Teilnehmer zugeordnet ist, ob es sich bei einem einer Adresse zugeordneten Teilnehmer um einen sicherheitsgerichteten oder nicht sicherheitsgerichteten Teilnehmer handelt, wie viele Ein- und/oder Ausgänge der Teilnehmer besitzt und welchem AS-i-Geräteprofil der Teilnehmer entspricht. Diese Informationen können von der Konfigurationseinheit als Gemeinschafts-Konfigurations-Informationen sowohl für die Konfiguration des Bus-Masters als auch für die Konfiguration des Sicherheitsmonitors verwendet werden. Somit ist nur eine einmalige Eingabe der benötigten Konfigurations-Information durch den Benutzer notwendig, wodurch der Konfigurationsaufwand für den Benutzer verringert wird. Außerdem wird durch die grafische Darstellung des Konfigurationsvorgangs eine besonders einfache, schnelle und fehlersichere Konfiguration ermöglicht.

Neben den Gemeinschafts-Konfigurations-Informationen, die sowohl für die Konfiguration des Bus-Masters als auch des Sicherheitsmonitors verwendet werden können, werden gleichzeitig noch, zum Beispiel in den Teilnehmerbeschreibungen enthaltene solche Konfigurations-Informationen geliefert, die gegebenenfalls nur für die Konfiguration des Sicherheitsmonitors bzw. nur für die Konfiguration des Bus-Masters notwendig sind.

In den Elementbeschreibungen der Elementtypen E 1 bzw. E2 können dabei insbesondere Konfigurations-Informationen für den Sicherheitsmonitor enthalten sein, die die Logik-Vorauswertung der von den Elementen bzw. deren Bus-Anschaltungen gelieferten Signale betreffen. Im vorliegenden Fall enthält die Elementbeschreibung E1, die die sichere Zweihandsteuerung beschreibt, eine Information darüber, dass die Zustände der zwei Schalter der Zweihandsteuerung, die auf verschiedenen Kanälen übermittelt werden, bis auf eine zeitliche Toleranz von z.B. 0,5 Sekunden oder einem anderen, insbesondere von einem Benutzer eingebbaren Wert synchron sein müssen, damit von einem sicheren Zustand auszugehen ist.

Wie im Diagramm der Fig. 5 angedeutet, kann der Sicherheitsmonitor anhand dieser Information konfiguriert werden, um die nach einer Eingangsauswertung 52 bereitgestellten Signale E1_1 und E1_2, die jeweils den Zustand eines Kanals der Zweihandsteuerung beschreiben, durch eine entsprechende Logik-Vorauswertung 54 gemäß den vorstehend genannten Vorgaben geeignet vorausgewertet werden, um ein vorausgewertetes Signal E1' zur Verfügung zu stellen, das eine eindeutige Aussage darüber liefert, ob der Zustand der Zweihandsteuerung sicher ist oder nicht. Dieses Signal E1' kann dann einer vom Benutzer noch zu programmierenden Logikauswertung 56 des Sicherheitsmonitors zur Verfügung gestellt werden.

### Bezugszeichenliste

- 10: Bussystem
- 12: Teilnehmer
- 14: Busleitung
- 16: Bus-Master
- 18: Sicherheitsmonitor
- 20: speicherprogrammierbare Steuerung, SPS
- 22: Mikroprozessor
- 24: Sicherheitsschalter
- 26: Konfigurationsvorrichtung
- 28: Eingabeeinheit
- 30: Computermaus
- 32: Konfigurationseinheit
- 34: Schnittstelle
- 36: Speichereinheit
- 38: Anzeige-Einheit
- 40: grafische Repräsentation eines Teilnehmertyps
- 44: grafische Repräsentation einer Bus-Adresse
- 46: grafische Repräsentation eines Elementtyps
- 48, 50: Drag-and-Drop-Operation
- 52: Eingangsauswertung
- 54: Logik-Vorauswertung
- 56: Logikauswertung

## Patentansprüche

1. Vorrichtung (26) zum Konfigurieren eines Bussystems (10), das mehrere Teilnehmer (12) sowie einen Bus-Master (16) und einen Sicherheitsmonitor (18) umfasst, mit einer Eingabeeinheit (28), über die zum Konfigurieren des Bussystems (10) geeignete Konfigurations-Informationen eingebbar und/oder auswählbar sind, und einer Konfigurationseinheit (26), **dadurch gekennzeichnet, dass**
die Konfigurationseinheit (26) ausgebildet ist, um mittels zumindest einer identischen, über die Eingabeeinheit (28) eingegebenen oder ausgewählten Gemeinschafts-Konfigurations-Information sowohl den Bus-Master (16) als auch den Sicherheitsmonitor (18) zu konfigurieren.

2. Vorrichtung nach Anspruch 1,
**dadurch gekennzeichnet, dass**
die zumindest eine Gemeinschafts-Konfigurations-Information eine Adress-Information umfasst, die aussagt, zur Kommunikation mit welchem Teilnehmer (12) des Bussystems (10) eine bestimmte Bus-Adresse zu konfigurieren ist.

3. Vorrichtung nach Anspruch 2,
**dadurch gekennzeichnet, dass**
die zumindest eine Gemeinschafts-Konfigurations-Information eine Sicherheits-Information umfasst, die aussagt, ob ein einer bestimmten Bus-Adresse zugeordneter Teilnehmer (12) ein sicherheitsgerichteter Teilnehmer (12) oder ein nicht-sicherheitsgerichteter Teilnehmer (12) ist.

4. Vorrichtung nach einem der Ansprüche 2 oder 3,
**dadurch gekennzeichnet, dass**
die zumindest eine Gemeinschafts-Konfigurations-Information eine Ein/Ausgangs-Information umfasst, die aussagt, wie viele Eingänge und/oder Ausgänge ein einer bestimmten Bus-Adresse zugeordneter Teilnehmer (12) aufweist.

5. Vorrichtung nach zumindest einem der vorstehenden Ansprüche, **dadurch gekennzeichnet, dass**
die Vorrichtung eine Speichereinheit (36) mit mehreren Teilnehmerbeschreibungen unterschiedlicher Teilnehmertypen aufweist, wobei die Teilnehmerbeschreibungen für die jeweiligen Teilnehmertypen relevante Konfigurations-Informationen enthalten und die Eingabeeinheit (28) derart ausgestaltet ist, dass die Eingabe oder Auswahl der Konfigurations-Informationen die Auswahl eines Teilnehmertypen mit der ihm zugeordneten Teilnehmerbeschreibung umfasst.

6. Vorrichtung nach Anspruch 5,
**dadurch gekennzeichnet, dass**
die Vorrichtung eine Anzeige-Einheit (38) umfasst, die dazu ausgebildet ist, um in einem ersten Anzeige-Bereich grafische Repräsentationen (40) der einzelnen Teilnehmer-Typen anzuzeigen und in einem zweiten Anzeige-Bereich grafische Repräsentationen (44) von Bus-Adressen anzuzeigen.

7. Vorrichtung nach Anspruch 6,
**dadurch gekennzeichnet, dass**
die Vorrichtung dazu ausgebildet ist, einem Benutzer eine Zuordnung eines Teilnehmer-Typs zu einer Bus-Adresse mittels einer Drag-and-Drop-Funktionalität zwischen den grafischen Repräsentationen (40) der Teilnehmer-Typen und den grafischen Repräsentationen (44) der Bus-Adressen zu ermöglichen, vorzugsweise derart, dass nach der Zuordnung eines Teilnehmer-Typs zu einer Bus-Adresse die grafische Repräsentation (44) der Bus-Adresse so geändert wird, dass die Zuordnung des Teilnehmer-Typs zu der Bus-Adresse erkennbar ist.

8. Vorrichtung nach zumindest einem der vorstehenden Ansprüche, **dadurch gekennzeichnet, dass**
wenigstens ein Teilnehmer (12) des Bussystems (10) eine Busanschaltung umfasst.

9. Verfahren zum Konfigurieren eines Bussystems (10), das mehrere Teilnehmer (12) sowie einen Bus-Master (16) und einen Sicherheitsmonitor (18) umfasst, wobei das Verfahren die Schritte umfasst:
- Eingeben oder Auswählen von zum Konfigurieren des Bussystems (10) geeigneten Konfigurations-Informationen, und
- Konfigurieren sowohl des Bus-Masters (16) als auch des Sicherheitsmonitors (18) mittels zumindest einer identischen, eingegebenen oder ausgewählten Gemeinschafts-Konfigurations-Information.

10. Verfahren nach Anspruch 9,
**dadurch gekennzeichnet, dass**
die zumindest eine Gemeinschafts-Konfigurations-Information eine Sicherheits-Information umfasst, die aussagt, ob ein einer bestimmten Bus-Adresse zugeordneter Teilnehmer (12) ein sicherheitsgerichteter Teilnehmer (12) oder ein nicht-sicherheitsgerichteter Teilnehmer (12) ist.

11. Verfahren nach einem der Ansprüche 9 oder 10,
**dadurch gekennzeichnet, dass**
mehrere Teilnehmerbeschreibungen unterschiedlicher Teilnehmertypen abgespeichert sind, wobei die Teilnehmerbeschreibungen für die jeweiligen Teilnehmer-Typen relevante Konfigurations-Informationen enthalten, und
das Eingeben oder Auswählen der Konfigurations-Informationen das Auswählen eines Teilnehmer-Typs mit der ihm zugeordneten Teilnehmerbeschreibung umfasst.

12. Computerprogramm, das dazu ausgebildet ist, einen Computer so zu konfigurieren, dass durch den Computer ein Verfahren gemäß einem der Ansprüche 9 bis 11 ausführbar ist.

13. Datenträger, der dazu ausgebildet ist, mit einem Computer so zusammenzuwirken, dass der Computer so konfiguriert wird, dass durch den Computer ein Verfahren gemäß einem der Ansprüche 9 bis 11 ausführbar ist.
